# EUROPEAN PATENT APPLICATION

(11) **EP 1 183 948 A1**
(43) Date of publication of application: **06.03.2002**
(21) Application number: 00931689.4
(22) Date of filing: 02.06.2000
(51) Int. Cl.: A01N 37/38, A01N 37/50, A01N 43/54, A01N 25/30, A01N 25/32

(54) **STROBILURIN FUNGICIDE COMPOSITION REDUCED IN CHEMICAL DAMAGE**

(30) Priority: 04.06.1999 JP 15878699
(71) Applicant: SHIONOGI & CO., LTD., Osaka-shi, Osaka 541-0045 (JP)
(72) Inventor: Kume, Ryuichi, Shionogi & Co., Ltd., Amagasaki-shi, Hyogo 660-0813 (JP); Miyazaki, Hiromi, Shionogi & Co., Ltd., Akoh-shi, Hyogo 678-0239 (JP); Inada, Mitsuaki, Shionogi & Co., Ltd., Akoh-shi, Hyogo 678-0239 (JP)
(74) Representative: Tanner, James Percival
(86) International application number: JP0003624
(87) International publication number: WO0074484

(57) **Abstract**

A fungicide composition reduced in chemical damage, which comprises (a) one or more fungicidal strobilurin compounds and (b) one or more sulfonate surfactants selected from the group consisting of lignosulfonic acid salts, arylsulfonic acid salts, salts of condensates of arylsulfonic acids, arylalkylsulfonic acid salts and salts of condensates of arylsulfonic acids, with the provisos that when the sulfonate surfactant is a lignosulfonic acid salt, the composition is free from silicic acid or potassium silicate and that when the sulfonate surfactant is a condensed arylsulfonic acid salt or a combination thereof with a lignosulfonic acid salt, the fungicidal strobilurin compound is not metominostrobin.

## Description

### TECHNICAL FIELD

### (Field of the Invention)

The present invention relates to a fungicide composition, and in particular to a fungicide composition which causes less chemical damage which comprises a strobilurin-based fungicidal compound and a sulfonic acid-based surfactant.

### BACKGROUND ART

### (Prior Art)

Conventionally, strobilurin-based compounds are known to have an antibacterial activity to yeast and several types of eumycetes (see, for example, Shokubutsu Boeki, vol. 48, No. 7, pp. 268-290 (1994)). Some of such compounds are known to also have a pesticidal or herbicidal activity. Due to such activities, strobilurin-based compounds are used as, for example, fungicides, insecticides and herbicides (see, for example, Japanese Patent No. 2558001, European Laid-Open Publication Nos. 253213 and 382375, and Japanese Laid-Open Publication Nos. 4-182461 and 4-288045). Strobilurin-based compounds provide superb effects of preventing damage due to disease when they are used as agricultural fungicides but have a problem of often causing damage due to the chemicals thereof.

### (Problems to be Solved by the Invention)

An objective of the present invention is to provide a fungicide composition which comprises a strobilurin-based fungicidal compound which causes reduced chemical damage.

### DISCLOSURE OF THE INVENTION

### (Means for Solving the Problem)

As a result of active studies on the above-described problem, the present inventors found that the chemical damage caused by strobilurin-based fungicidal compounds is significantly alleviated by mixing a sulfonic acid-based surfactant with a strobilurin-based fungicidal compound, and completed the present invention based on this knowledge.

The present invention provides a fungicide composition causing reduced chemical damage, comprising: (a) one or two or more strobilurin-based fungicidal compounds; and (b) one or two or more sulfonic acid-based surfactants selected from the group consisting of a ligninsulfonic acid salt, an arylsulfonic acid salt, an arylsulfonic acid condensate salt, an alkylarylsulfonic acid salt, and an alkylarylsulfonic acid condensate salt. When the sulfonic acid-based surfactant is a ligninsulfonic acid salt, silicic acid and/or potassium silicate are not included; and when the sulfonic acid-based surfactant is an arylsulfonic acid condensate salt or a combination of an arylsulfonic acid condensate salt and a ligninsulfonic acid salt, the strobilurin-based fungicidal compound is not metominostrobin. See, Japanese Patent Application Nos. 10-164014 and 10-177560.

The sulfonic acid-based surfactant may be a ligninsulfonic acid salt, an arylsulfonic acid salt, an alkylarylsulfonic acid salt, or a combination of a ligninsulfonic acid salt and an alkylarylsulfonic acid salt.

The content of strobilurin-based fungicidal compound may be 0.5% by weight to 90% by weight, and the content of the sulfonic acid-based surfactant may be 1% by weight to 20% by weight.

The fungicide composition may include substantially no surfactant having a polyoxyethylene chain in its chemical structure.

The fungicide composition may be in the form of an aqueous suspension of an agricultural chemical preparation. The average particle diameter of the strobilurin-based fungicidal compound may be 0.1 µm to 10 µm. Preferably, the average particle diameter of the strobilurin-based fungicidal compound may be 0.5 µm to 4 µm.

The fungicide composition may further comprise a polymer-based thickening agent or an inorganic thickening agent. The thickening agent may be at least one selected from the group consisting of xanthan gum, wellane gum, rhamxan gum, guar gum, locust bean gum, tragacanth gum, and colloidal silica. Preferably, the thickening agent may be xanthan gum. The content of the thickening agent may be 0.01% by weight to 20% by weight.

The strobilurin-based fungicidal compound may be metominostrobin, azoxystrobin, kresoxym methyl, 2-[2-(2,5-dimethylphenoxymethyl)phenyl]-2-methoxy-N-methyl-acetamide, or 2-[2-(2,5-dimethylphenoxymethyl) phenyl]-2-methoxyimino-N-methylacetamide.

### BRIEF DESCRIPTION OF THE DRAWINGS

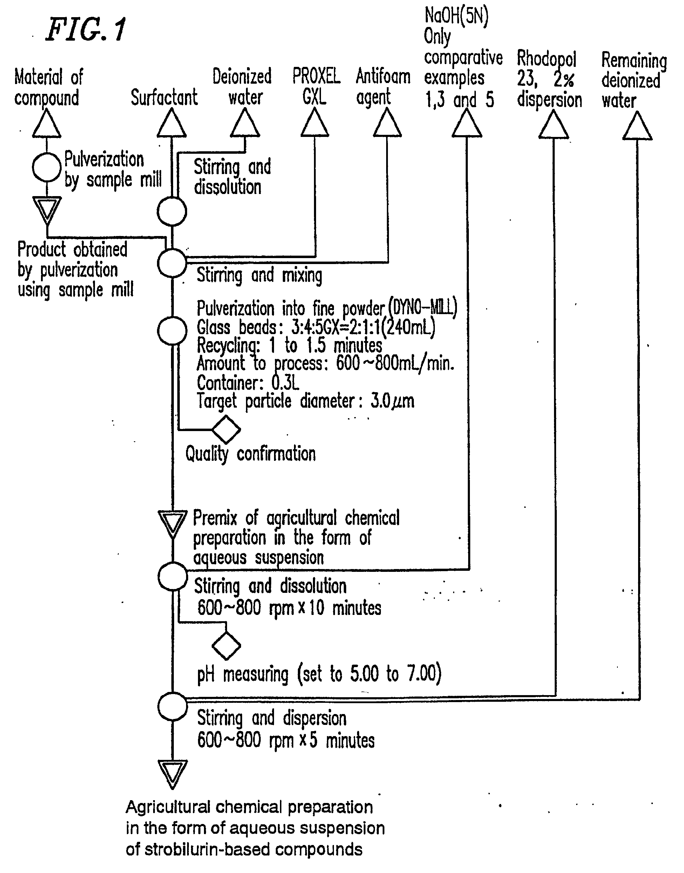

Figure **1** is a flowchart illustrating an exemplary method for preparing a fungicide composition in the form of an aqueous suspension of a pesticide preparation.

### BEST MODE FOR CARRYING OUT THE INVENTION

### (Embodiments of the Invention)

Hereinafter, the present invention will be described in detail.

A fungicide composition according to the present invention includes one or two or more strobilurin-based fungicide compounds and one or two or more sulfonic acid-based surfactants which are selected from the group consisting of a ligninsulfonic acid salt, an arylsulfonic acid salt, an arylsulfonic acid condensate salt, an alkylarylsulfonic acid salt, and an alkylarylsulfonic acid condensate salt.

Any known strobilurin-based fungicidal compound is usable. Strobilurin-based fungicidal compounds are described in, for example, Japanese Patent No. 2558001, European Laid-Open Publication Nos. 253213 and 382375, Japanese Laid-Open Publication Nos. 4-182461 and 4-288045, and WO95/27693.

A representative structure of a strobilurin-based fungicidal compound is shown below. 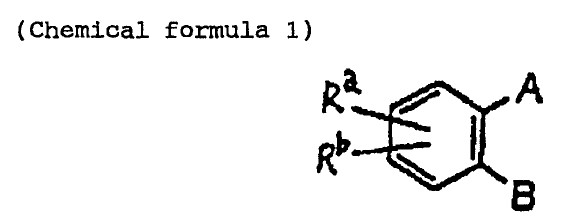 where R^{a} and R^{b} are each independently hydrogen, lower alkyl, lower alkoxy, halogenated lower alkyl, lower alkylated silyl, halogen or nitro, A represents a substituent selected from the group consisting of the following: 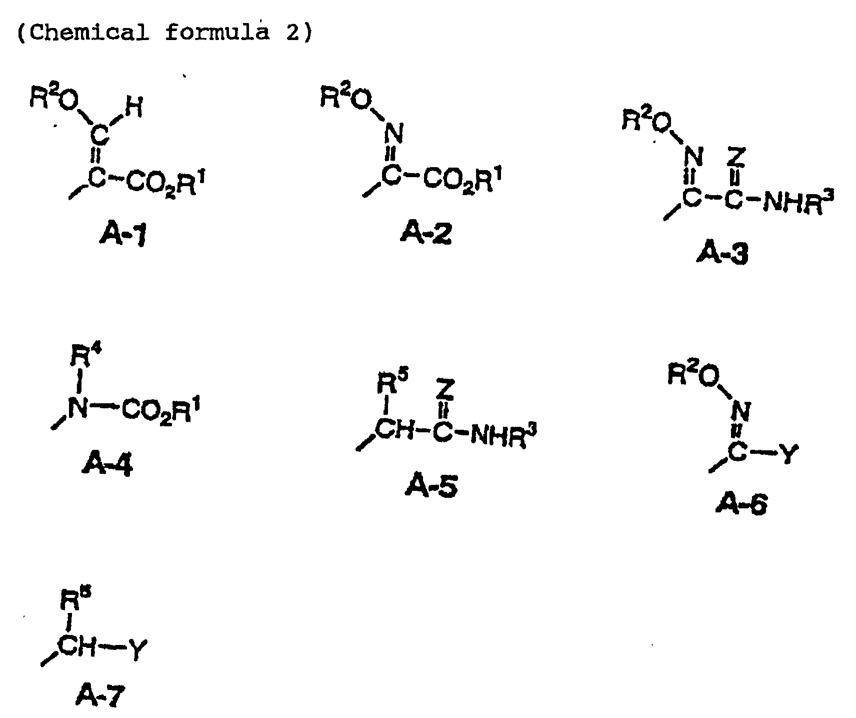 where R¹, R² and R³ are each independently a lower alkyl group, R⁴ is a lower alkyl group or a lower alkyloxy group, R⁵ is a lower alkyloxy group or a lower alkyloxyamino group, Y is a heterocycle or a substituted heterocycle, Z is an oxygen atom or a sulfur atom, and B represents a substituent selected from the group consisting of the following: 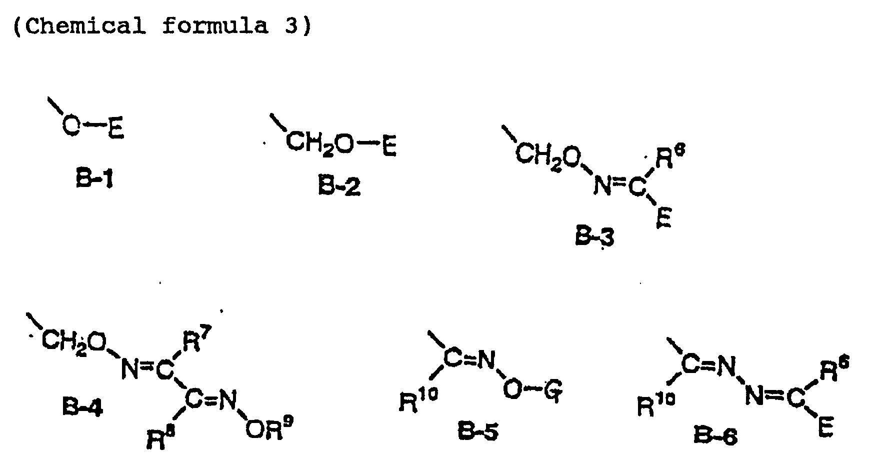 where R⁶ is a lower alkyl group or a lower alkylthio group, R⁷ is a lower alkyl group, a phenyl group or a substituted phenyl group, R⁸ is a lower alkyl group, a phenyl group, a substituted phenyl group, or a lower alkoxycarbonyl group, R⁹ is a lower alkyl group, R¹⁰ is a hydrogen atom or a lower alkyl group, E is a phenyl group, a substituted phenyl group or a substituted heterocycle group, and G is an aralkyl group or a substituted aralkyl group.

The term "substituted" in various groups mentioned above represents, for example, lower alkyl, lower alkoxy, halogenated lower alkyl, lower alkylated silyl, halogen, nitro or cyano.

The term "lower" in various groups mentioned above represents that, for example, the number of carbon atoms in the group is 8 or less, preferably 6 or less, and more preferably 4 or less.

Specific examples of the substituent A are as follows:

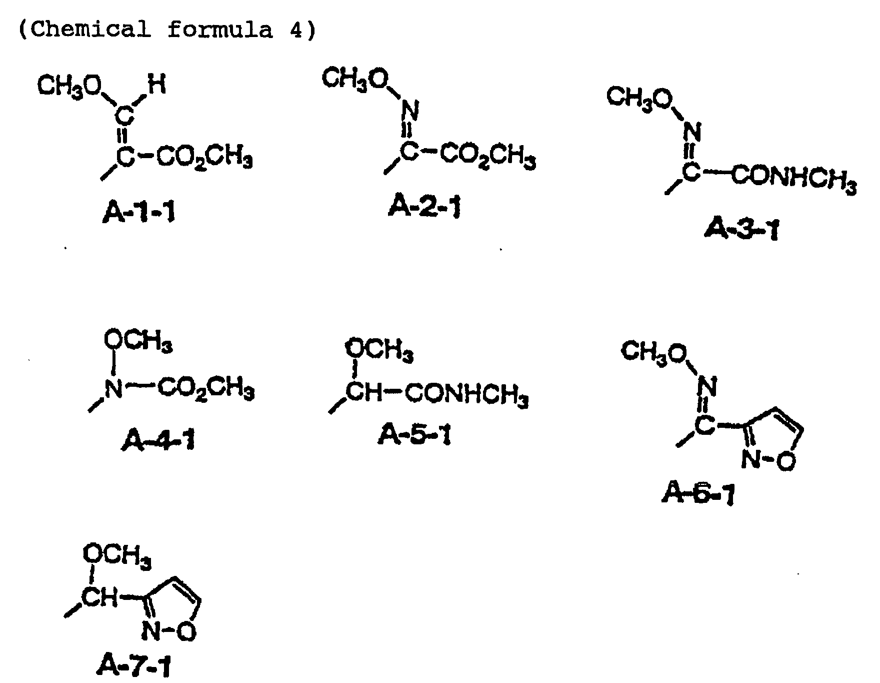

Specific examples of the substituent B are as follows:

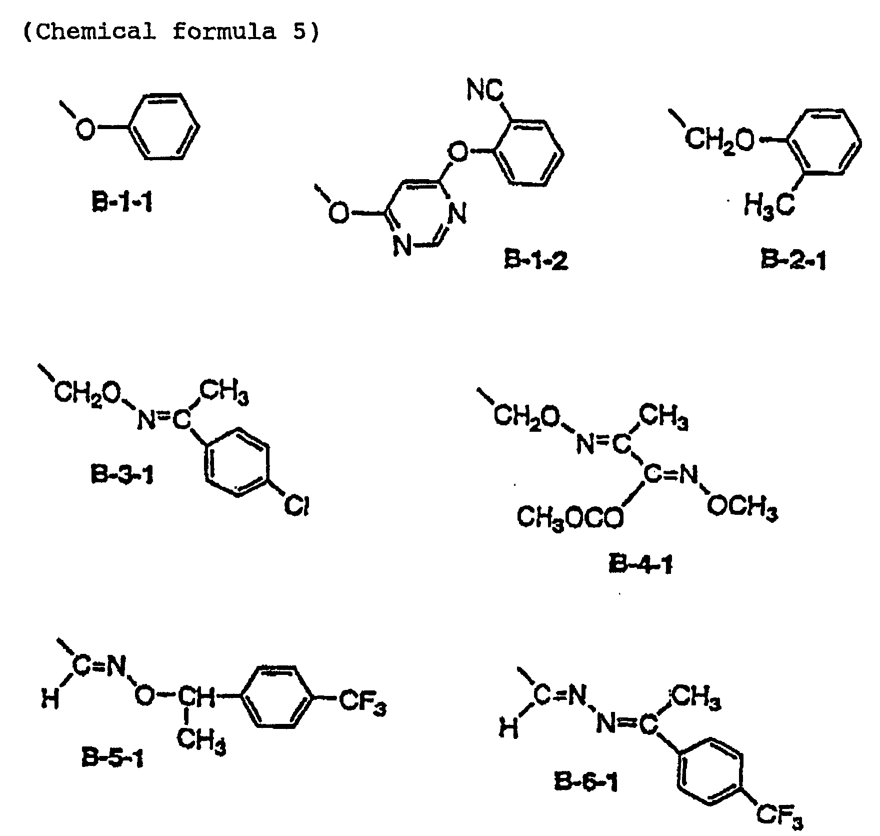

Specific examples of the strobilurin-based fungicidal compounds include metominostrobin (compound S1), azoxystrobin (compound S2), kresoxym methyl (compound S3), 2-[2-(2,5-dimethylphenoxymethyl) phenyl]-2-methoxy-N-methylacetamide (compound S4), and 2-[2-(2,5-dimethylphenoxymethyl)phenyl]-2-methoxylmino-N-methylacetamide (compound S5).

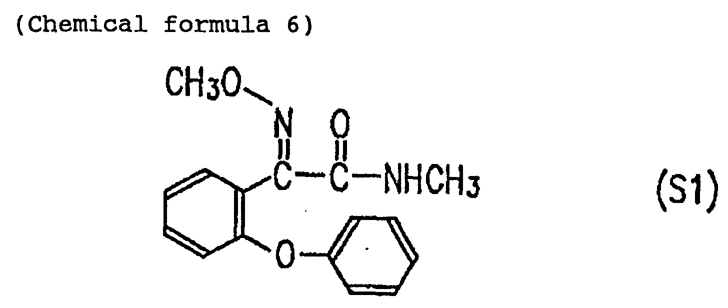

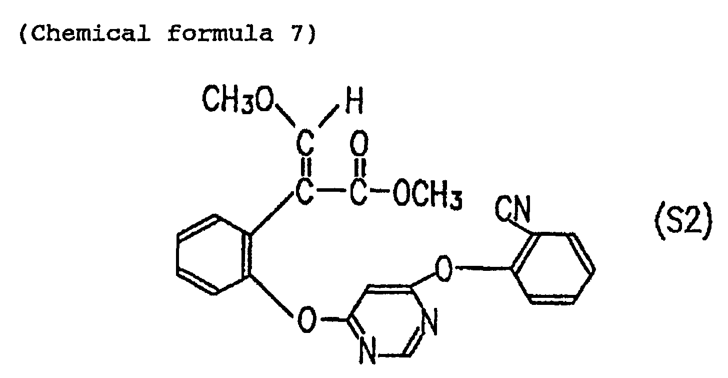

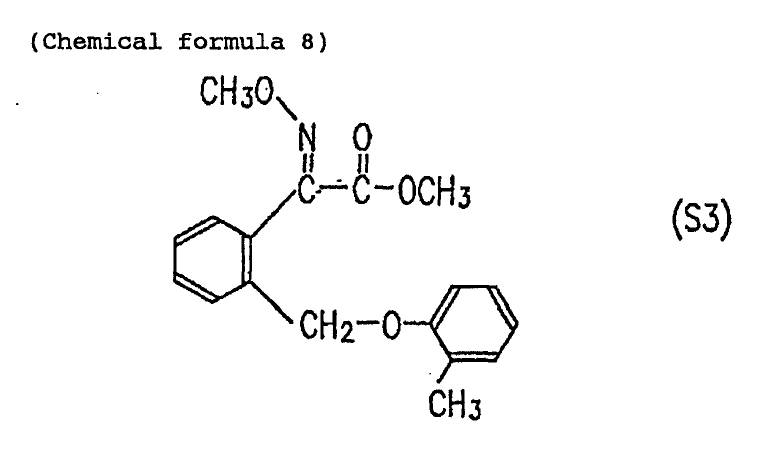

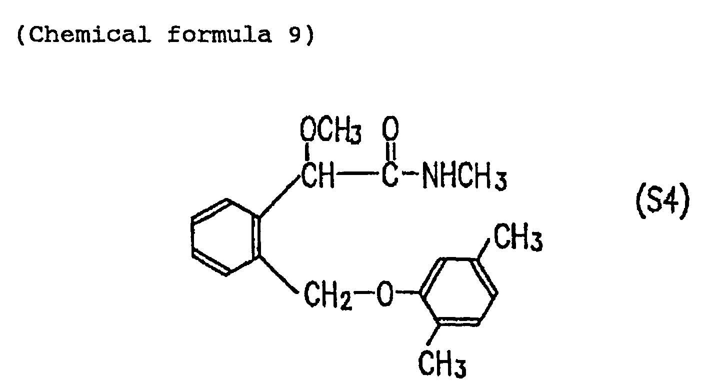

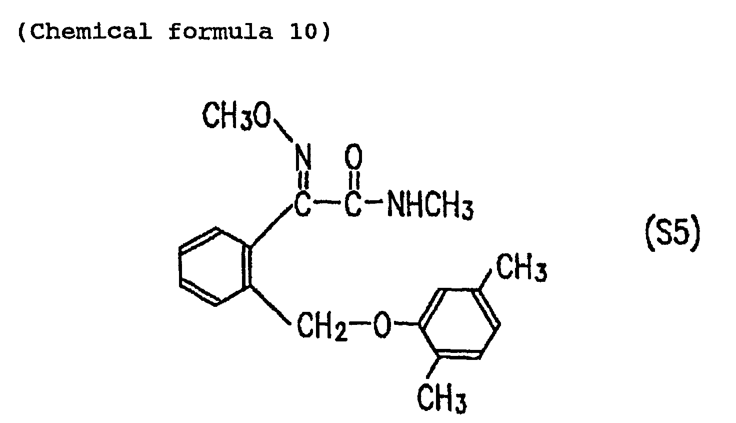

The content of the strobilurin-based fungicidal compound in a fungicide composition according to the present invention is preferably 0.5% by weight to 90% by weight, more preferably 0.5% by weight to 70% by weight, and further more preferably 2% by weight to 40% by weight, and most preferably 10% by weight to 30% by weight. In this specification, the content of each component in the fungicide composition is represented by a value with respect to the total weight of the composition.

A sulfonic acid-based surfactant usable in a fungicide composition according to the present invention is one or two or more selected from the group consisting of a ligninsulfonic acid salt, an arylsulfonic acid salt, an arylsulfonic acid condensate salt, an alkylarylsulfonic acid salt, and an alkylarylsulfonic acid condensate salt.

The "salt" mentioned above is preferably, for example, an alkaline metal salt, an alkaline earth metal salt, an organic salt, or an inorganic salt. More preferably, the "salt" is a sodium salt, a potassium salt, a calcium salt, an amine salt or an ammonium salt. Most preferably, the "salt" is a sodium salt. The "aryl" mentioned above is preferably an aryl group containing 6 to 14 carbon atoms, more preferably an aryl group containing 6 to 10 carbon atoms, and most preferably phenyl or naphthyl. The "alkyl" mentioned above is preferably a straight chain or branched chain alkyl containing 1 to 12 carbon atoms, more preferably a straight chain or branched chain alkyl containing 1 to 6 carbon atoms, and most preferably methyl, ethyl, n-propyl, isopropyl or n-butyl.

Specific examples of the ligninsulfonic acid salt include sodium ligninsulfonate, calcium ligninsulfonate, ammonium ligninsulfonate, and modified sodium ligninsulfonate.

Specific examples of the arylsulfonic acid salt include sodium benzenesulfonate, sodium naphthalenesulfonate, and calcium naphthalenesulfonate.

Specific examples of the alkylarylsulfonic acid salt include sodium dibutylnaphthalenesulfonate, sodium methylnaphthalenesulfonate, and sodium dodecylbenzenesulfonate.

Specific examples of the arylsulfonic acid condensate salt include a sodium salt of benzenesulfonic acid formaldehyde condensate, and a sodium salt of naphthalenesulfonic acid formaldehyde condensate.

Specific examples of the alkylarylsulfonic acid condensate salt include a sodium salt of methylnaphthalene-sulfonic acid formaldehyde condensate, and a sodium salt of dimethylnaphthalenesulfonic acid formaldehyde condensate.

Specific component names and trade names of the aforementioned surfactants include a sodium salt of β-naphthalenesulfonic acid formalin condensate (DEMOL N and DEMOL RN, Kao Corporation), a sodium salt of a special aromatic sulfonic acid formalin condensate (DEMOL MS and DEMOL SNB, Kao Corporation), a formaldehyde polycondensate of sodium naphthalenesulfonate (Newkalgen FS-4, Takemoto Oil & Fat Co., Ltd.), a ligninsulfonic acid salt (Newkalgen WG-4, Takemoto Oil & Fat Co., Ltd.), and a naphthalenesulfonic acid condensate salt (RUNOX 1000C, Toho Chemical Industry Co., Ltd.).

The content of the sulfonic acid-based surfactant in a fungicide composition according to the present invention is preferably 1% by weight to 20% by weight, more preferably 2% by weight to 10% by weight, and most preferably 3% by weight to 6% by weight.

A fungicide composition according to the present invention preferably includes substantially no surfactant having a polyoxyethylene chain in its structure. Examples of such a surfactant include anionic surfactants such as polyoxyethylene alkylether sulfate ester salt, polyoxyethylene alkylarylether sulfate ester salt, polyoxyethylene alkylether phosphate ester salt, polyoxyethylene alkylarylether phosphate ester salt, and the like (these salts may be, for example, alkaline metal salts, ammonium salts, or amine salts); and nonionic surfactants such as polyoxyethylene alkylether, polyoxyethylene alkylarylether, polyoxyethylene alkylarylphenylether, polyoxyethylene sorbitan fatty acid ester, polyoxyethylene polyoxypropylene glycol and the like. When including such a surfactant, a fungicide composition sometimes does not provide sufficient alleviation of chemical damage.

A fungicide composition according to the present invention may be used in various forms of formulations. Examples of formulations include a flowable, an emulsifiable concentrate, wettable powder, water dispersible granule, a tablet, dust, a granule, a dust-granule mixture, a microemulsion, a microcapsule, and a smoking agent.

These formulations may include various additives depending on the forms thereof, such as a solid carrier, a solid diluent, a liquid carrier, a liquid diluent, a spreader, a dispersant, a stabilizer, and so on.

Examples of the solid carrier and solid diluent include, for example, plant substances (for example, grain powder, tobacco stalk powder, soybean powder, walnut shell powder, vegetable powder, wood shavings, rice bran, bark powder, cellulose powder, and vegetable-extract residue), fibrous substances (for example, paper, cardboard, and used cloth), artificial plastic powder, clay (for example, kaolin, bentonite, and white clay), talc, and inorganic substances (for example, pyrophyllite, sericite, pumicite, sulfur powder, and activated carbon), and chemical fertilizers (for example, ammonium sulfate, ammonium phosphate, ammonium nitrate, urea, and ammonium chloride).

Examples of the liquid carrier and liquid diluent include, for example, water, alcohols (for example, methanol and ethanol), ketones (for example, acetone, and methylethylketone), ethers (for example, diethylether, dioxane, cellosolve, and tetrahydrofuran), aromatic hydrocarbons (for example, benzene, toluene, xylene, and methylnaphthalene), aliphatic hydrocarbons (for example, gasoline, kerosene, and coal oil), esters, nitriles, acid amides (for example, dimethyl formamide and dimethyl acetamide), and halogenated hydrocarbons (for example, dichloroethane and carbon tetrachloride).

Examples of the spreader and dispersant include, for example, casein, gelatin, starch powder, carboxy methylcellulose, gum arabic, arginic acid, lignin, bentonite, syrup, polyvinyl alcohol, pine oil and agar.

Examples of the stabilizer include, for example, PAP (isopropyl-phosphate mixture), tricresyl phosphate (TCP), tall oil, epoxy oil, surfactants, and fatty acids and esters thereof.

A fungicide composition according to the present invention may further include one or two or more other agricultural chemical components such as, for example, fungicides, insecticides, herbicides, miticides, nematicides, bird repellents, growth regulators, fertilizers, and soil conditioners.

A fungicide composition according to the present invention is preferably in the form of an aqueous suspension of an agricultural chemical preparation, namely, a form of a suspension including an aqueous liquid carrier or diluent as an additive.

The average particle diameter of a strobilurin-based fungicidal compound in the agricultural chemical preparation in the aqueous suspension of agricultural chemical preparation is representatively 0.1 µm to 20 µm, preferably 0.1 µm to 10 µm, more preferably 0.1 µm to 7 µm, and most preferably 1 µm to 5 µm.

A fungicide composition in the form of an aqueous suspension of the above-described agricultural chemical preparation may further include a polymer-based thickening agent or an inorganic thickening agent. Examples of usable polymer-based thickening agents include xanthan gum, wellane gum, rhamxan gum, guar gum, locust bean gum, tragacanth gum, pullulan, pectin, arabinogalactan, casein, Tara gum, gum arabic, tamarind gum, karaya gum, starch, sodium alginate, carageenan, celluloses (e.g., carboxymethyl cellulose, hydroxyethyl cellulose, carboxyethyl cellulose, methylcellulose, hydroxypropyl cellulose, and hydroxyethyl cellulose), polyvinyl alcohol, and polyacrylic acid. Examples of usable inorganic thickening agents include colloidal silica, and colloidal hydrated aluminum magnesium silicate. Preferably, one or more thickening agent selected from the group consisting of xanthan gum, wellane gum, rhamxan gum, guar gum, locust bean gum, tragacanth gum, and colloidal silica is used. Xanthan gum is most preferable.

The content of the thickening agent in a fungicide composition in the form of an aqueous suspension of the above-described agricultural chemical preparation is preferably 0.01% by weight to 20% by weight, more preferably 0.05% by weight to 5% by weight, and most preferably 0.1% by weight to 0.3% by weight.

A fungicide composition in the form of an aqueous suspension of the above-described agricultural chemical preparation may further include an anti-freezing agent, an anti-foaming agent, and an antiseptic when necessary in addition to the above-described components. Examples of the anti-freezing agent include ethylene glycol, propylene glycol, and glycerin. Examples of the anti-foaming agent include silicone-based compounds, and emulsions of silicone or modified silicone. Examples of the antiseptic include formalin solution, sorbic acid, butyl p-oxybenzoate, potassium sorbate, organic nitrogen sulfur-based composites, sodium benzoate, 1,2-benzisothiazolin-3-one, and organic nitrogen sulfur halogen-based compounds.

If necessary, a fungicide composition in the form of an aqueous suspension of the above-described agricultural chemical preparation may further include various additives such as, for example, a decomposition inhibitor, a crystal growth inhibitor, a specific gravity adjusting agent, a color masking agent, and a pH adjusting agent.

A fungicide composition according to the present invention can be prepared in the above-mentioned various formulations by known methods in the art. An aqueous suspension may be prepared, for example, in the following procedure: (1) A strobilurin-based fungicidal compound is stirred and dispersed in an aqueous solution containing a sulfonic acid-based surfactant; (2) The strobilurin-based fungicidal compound in the dispersion obtained in (1) is pulverized using a wet fine pulverizer; and (3) A thickening agent is added if necessary, and the dispersion containing strobilurin-based fungicidal compound with the thickening agent is further stirred.

A fungicide composition according to the present invention may be applied to, for example, plants, plant seeds, soil around the plants, soil to be sowed, paddy fields, and water used for the hydroponics by usual methods, for example, liquid formulation application, immersion, atomization, fumigation, smoking, douche, suspension formation, coating, powder spraying, spraying, dust coating, spray coating, submerged application, damp covering, paste covering, and robe-like coating.

The amount of a fungicide composition according to the present invention to be applied may vary in accordance with the formulation, the method of application, the target of application, and the like. For example, when a fungicide composition according to the present invention is applied to a plant, the composition is generally used so that the concentration of the strobilurin-based fungicide is 0.0001% by weight to 1% by weight, and preferably 0.001% by weight to 0.5% by weight. When a fungicide composition according to the present invention is applied to a seed, the composition is generally used so that the amount of the strobilurin-based fungicide per kilogram of the seed is 0.001 g to 50 g, and preferably 0.01 g to 10 g. When a fungicide composition according to the present invention is applied to soil, the composition is generally used so that the amount of the strobilurin-based fungicide per hectare of the soil is 1 g to 5.0 kg, and preferably 10 g to 1.0 kg.

The use of a fungicide composition according to the present invention suppresses generation of chemical damage without substantially reducing the fungicidal activity of the strobilurin-based compound.

### (Examples)

Hereinafter, the present invention will be described by way of examples, but the present invention is not limited to these examples.

In the following examples and comparative examples, an agricultural chemical preparation in the form of an aqueous suspension was prepared in accordance with the flowchart shown in Figure **1**.

### (Example 1)

(1) 10.00 g of sodium ligninsulfonate (Newkalgen WG-4, Takemoto Oil & Fat Co., Ltd.) and 0.5 g of sodium dibutylnaphthalenesulfonate (Newkalgen WG-1, Takemoto Oil & Fat Co., Ltd.) as surfactants are put into a beaker containing 60.00 g of deionized water, and stirred for 5 minutes to be dissolved. The sodium dibutylnaphthalenesulfonate is added in an extremely small amount in order that when a strobilurin-based compound is added in step (2), the interfacial tension between the strobilurin-based compound and water is lowered and thus allows the strobilurin-based compound to be wetted easily.
(2) To the solution obtained in step (1), 22.00 g of a material obtained by pulverization in a sample mill of 2-[2- (2,5-dimethylphenoxymethyl)phenyl]-2-methoxy-N-methyl-methylacetamide (above-described compound **S4**) as a strobilurin-based compound, 0.02 g of 1,2-benzisothiazolin-3-one (PROXEL GXL, Zeneca K.K.; antiseptic), and 0.10 g of emulsion of modified silicone (Antifoam E20, Kao Corporation; antifoaming agent) are added, and stirred for 5 minutes at 600 rpm to 800 rpm (T.K. AUTO HOMO MIXER, Tokushu Kika Kogyo Co., Ltd) so as to dissolve the 1,2-benzisothiazolin-3-one and disperse the material of the strobilurin-based compound S4 and the emulsion of modified silicone.
(3) Spherical glass beads 3GX (diameter: 0.5 mm to 0.75 mm), 4GX (diameter: 0.75 mm to 1.0 mm), and 5GX (diameter: 1.0 mm to 1.5 mm) are put into the wet fine pulverizer (DYNO-MILL) at a ratio of 2:1:1. The total amount of the glass beads is 80% of the volume of the pulverizing chamber (300 cc) of the DYNO-MILL in conformity with the recommendation of the manufacturer, i.e., 240 cc. While circulating the solution obtained in step (2) in such a pulverizer, the pulverizer is forcibly caused to stir, so as to pulverize the material of the strobilurin-based compound S4 dispersed in the solution. The amount to process was 600 to 800 mL/min resulted in the recycle time (i.e., the pulverization time) was 1 to 1.5 minutes.
(4) The particle diameter of the premix of the formulation obtained in step (3) is measured so as to confirm that the average particle diameter is 3±0.5 µm and that there is no noticeable increase in the viscosity between before and after the wet pulverization.
(5) Finally, 7.00 g of a 2% dispersion of xanthan gum as a thickening agent (Rhodopol 23, Rhodia Nicca Kabushiki Kaisha) and deionized water are added to the premix. The deionized water is added so that the total weight of the components is 100 g. Then, the mixture is stirred for 30 minutes at 600 rpm to 800 rpm so as to be dispersed.

The composition of the resultant agricultural chemical preparation in the form of an aqueous suspension is shown in Table 1.

The resultant agricultural chemical preparation in the form of an aqueous suspension was subjected to a chemical damage test described below. The results are shown in Table 2 through 4.

### (Comparative examples 1 and 2)

Agricultural chemical preparations in the form of aqueous suspensions were obtained in a procedure similar to that in Example 1 except that polyoxyethyleneoctylphenylether phosphate ester (Plysurf A210G, Dai-ichi Kogyo Seiyaku Co., Ltd.) and polyoxyethylenedistyrene-derivatized phenylether sulfuric acid ammonium salt (Hitenol NF13, Dai-ichi Kogyo Seiyaku Co., Ltd.) were respectively used as surfactants. In Comparative example 1, however, an aqueous solution of 5N sodium hydroxide was added and stirred to be dissolved for 10 minutes at 600 rpm to 800 rpm so that the pH of the mixture would be within the range of 5.00 to 7.00. This was performed in order to prevent the material of the strobilurin-based compound S4 from being decomposed by the strong acid of Plysurf A210G.

The compositions of the resultant agricultural chemical preparations in the form of aqueous suspensions are shown in Table 1.

The resultant agricultural chemical preparations in the form of aqueous suspensions were subjected to a chemical damage test described below. The results are shown in Table 2 through 4.

**(Table 1)**

| | Example 1 | Comparative example 1 | Comparative example 2 |
|---|---|---|---|
| Strobilurin-based compound S4 | 22. 00g | 22. 00g | 22. 00g |
| Plysurf A210G | - | 3. 00g | - |
| Hitenol NF13 | - | - | 3. 00g |
| Newkalgen WG-1 | 0. 5g | - | - |
| Newkalgen WG-4 | 10. 00g | - | - |
| Antifoam E20 | 0. 10g | 0. 10g | 0. 10g |
| PROXEL GXL | 0. 02g | 0. 02g | 0. 02g |
| Rodopol 23, 2% aqueous solution | 7. 00g | 12. 00g | 12. 00g |
| Sodium hydroxide (5N) | - | 1. 70g | - |
| Deionized water | 60. 38g | 61. 18g | 62. 88g |
| Total | 100. 00g | 100. 00g | 100. 00g |

### (Chemical damage test)

Regarding the chemical damage to Chinese cabbage:
Chinese cabbage (variety: "Taibyo-60-nichi") was seeded in four pots. 10 days after permanent planting, samples of the agricultural chemical preparation in the form of an aqueous suspension obtained in Example 1 were diluted 250-fold (800 ppm), 500-fold (400 ppm), 1,000-fold (200 ppm), and 2,000-fold (100 ppm) with deionized water. 40 ml of each sample was applied into the four pots. 9 days after permanent planting, samples of the agricultural chemical preparation in the form of an aqueous suspension obtained in Example 1 were diluted in a similar manner, and 20 ml of each sample was applied into four different pots.

Six days after and 11 days after the application of the preparation, three leaves in each pot were examined and the chemical damage index was determined in accordance with the following criteria. The chemical damage indices of the agricultural chemical preparations in the form of aqueous suspensions obtained in Comparative examples 1 and 2 were also determined in a similar manner. The results are shown in Tables 2 and 3, respectively. In Tables 2 and 3, the "total average" represents the simple average value of the chemical damage indices of the leaves in all the pots tested, and the "average per pot" represents the maximum value and the minimum value of the average values, each of which is obtained from the chemical damage indices of the leaves in each pot.

The criteria for determining the chemical damage index are as follows.
0.5: Slight necrosis is observed on the leaf margin.
1: 1/4 of the mesophyll of leaf base is lost.
2: 1/2 of the mesophyll of leaf base is lost.
3: 3/4 of the mesophyll of leaf base is lost.
4: The mesophyll of leaf base is completely lost or so significantly deformed as to stop foliation.

**(Table 2)**

| Chinese cabbage | Example 1 | | Comparative example 1 | | Comparative example 2 | |
|---|---|---|---|---|---|---|
| Concentration (ppm) | Total average | Range of average per pot | Total average | Range of average per pot | Total average | Range of average per pot |
| 800 | 1. 17 | 0.00∼0.17 | 0. 38 | 0.00∼0.83 | 1. 58 | 0.33∼2.00 |
| 400 | 0. 00 | 0.00∼0.00 | 1. 08 | 0.00∼3.00 | 0. 25 | 0.00∼0.25 |
| 200 | 0. 00 | 0.00∼0.00 | 0. 04 | 0.00∼0.17 | 0. 00 | 0.00∼0.00 |
| 100 | 0. 00 | 0.00∼0.00 | 0. 04 | 0.00∼0.17 | 0. 00 | 0.00∼0.00 |
| Control | 0. 00 | 0.00∼0.00 | - | - | - | - |

**(Table 3)**

| Chinese cabbage | Example 1 | | Comparative example 1 | | Comparative example 2 | |
|---|---|---|---|---|---|---|
| Concentration (ppm) | Total average | Range of average per pot | Total average | Range of average per pot | Total average | Range of average per pot |
| 1600 | 0. 17 | 0.00∼0.67 | 2. 96 | 1.83∼4.00 | 2. 67 | 2.00∼3.00 |
| 800 | 0. 46 | 0.00∼1.00 | 1. 25 | 0.50∼2.00 | 1. 79 | 1.17∼2.00 |
| 400 | 0. 00 | 0.00∼0.00 | 0. 46 | 0.00∼1.83 | 0. 38 | 0.00∼0.83 |
| Control | 0. 00 | 0.00∼0.00 | - | - | - | - |

Regarding the chemical damage to tomatoes:

Tomatoes (variety: House Momotaro) were seeded in three pots. 7 days after permanent planting, samples of the agricultural chemical preparation in the form of an aqueous suspension obtained in Example 1 were diluted 250-fold (800 ppm), 500-fold (400 ppm), 1,000-fold (200 ppm), and 2,000-fold (100 ppm) with deionized water. 25 ml of each sample was applied into the three pots.

Six days after the spraying of preparation, four leaves in each pot were examined and the chemical damage index was determined in accordance with the following criteria. The chemical damage indices of the agricultural chemical preparations in the form of aqueous suspensions obtained in Comparative examples 1 and 2 were also determined in a similar manner. The results are shown in Table 4. In Table 4, the "total average" represents the simple average value of the chemical damage indices of the leaves in all the pots tested, and the "average per pot" represents the maximum value and the minimum value of the average values, each of which is obtained from the chemical damage indices of the leaves in each pot.

The criteria for determining the chemical damage index are as follows.
0.5: About 1 to 3 necrosis spots (white spots) are observed in the leaf.
1: Necrosis spots are observed in 5% or less of the leaf area.
2: Necrosis spots are observed in 6% to 10% of the leaf area.
3: Necrosis spots are observed in 11% to 50% of the leaf area.
4: Necrosis spots are observed in 51% or more of the leaf area, or the leaf dies.

**(Table 4)**

| Tomato | Example 1 | | Comparative example 1 | | Comparative example 2 | |
|---|---|---|---|---|---|---|
| Concentration (ppm) | Total average | Range of average per pot | Total average | Range of average per pot | Total average | Range of average per pot |
| 800 | 0. 00 | 0.00∼0.00 | 3. 60 | 0.00∼4.00 | 0. 00 | 0.00∼0.00 |
| 400 | 0. 00 | 0.00∼0.00 | 2. 00 | 0.00∼2.25 | 0. 00 | 0.00∼0.00 |
| 200 | 0. 00 | 0.00∼0.00 | 0. 96 | 0.00∼1.00 | 0. 00 | 0.00∼0.00 |
| 100 | 0. 00 | 0.00∼0.00 | 0. 13 | 0.00∼0.25 | 0. 00 | 0.00∼0.00 |
| Control | 0. 00 | 0.00∼0.00 | - | - | - | - |

As shown in Tables 2 through 4, the degree of chemical damage was significantly lower in the Chinese cabbages and tomatoes treated with the agricultural chemical preparation in the form of an aqueous suspension obtained in Example 1 of the present invention than in the celery cabbages and tomatoes treated with the agricultural chemical preparations in the form of aqueous suspensions obtained in Comparative examples 1 and 2.

### (Examples 2 and 3)

Agricultural chemical preparations in the form of aqueous suspensions were obtained in a manner similar to that in Example 1 except that (E)-2-methoxyimino-N-methyl-2-(2-phenoxyphenyl) acetamide (metominostrobin; above-described compound S1) and (E)-2-[2-(2,5-dimethylphenoxy)methylphenyl]-2-methoxyimino-N-methylacetamide (above-described compound S5) were respectively used instead of the strobilurin-based compound S4. The compositions of the resultant agricultural chemical preparations in the form of aqueous suspensions are shown in Table 5.

The resultant agricultural chemical preparations in the form of aqueous suspensions were subjected to a chemical damage test described below. The results are shown in Tables 6 and 7.

### (Comparative examples 3 and 4)

Agricultural chemical preparations in the form of aqueous suspensions were obtained in a manner similar to that in Example 1 except that metominostrobin (above-described compound S1) was used instead of the strobilurin-based compound S4 and that Plysurf A210G and Hitenol NF13 were respectively used as surfactants. In Comparative example 3, however, an aqueous solution of 5N sodium hydroxide was added and stirred to be dissolved for 10 minutes at 600 rpm to 800 rpm so that the pH of the mixture would be within the range of 5.00 to 7.00. This was performed in order to prevent the metominostrobin from being decomposed by the strong acid of Plysurf A210G. The compositions of the resultant agricultural chemical preparations in the form of aqueous suspensions are shown in Table 5.

The resultant agricultural chemical preparations in the form of aqueous suspensions were subjected to a chemical damage test described below. The results are shown in Tables 6 and 7.

### (Comparative examples 5 and 6)

Agricultural chemical preparations in the form of aqueous suspensions were obtained in a manner similar to that in Example 1 except that compound S5 was used instead of the strobilurin-based compound S4 and that Plysurf A210G and Hitenol NF13 were respectively used as surfactants. In Comparative example 5, however, an aqueous solution of 5N sodium hydroxide was added and stirred to be dissolved for 10 minutes at 600 rpm to 800 rpm so that the pH of the mixture would be within the range of 5.00 to 7.00. This was performed in order to prevent compound S5 from being decomposed by the strong acid of Plysurf A210G. The compositions of the resultant agricultural chemical preparations in the form of aqueous suspensions are shown in Table 5.

The resultant agricultural chemical preparations in the form of aqueous suspensions were subjected to a chemical damage test described below. The results are shown in Tables 6 and 7.

**(Table 5)**

| | Example 2 | Example 3 | Comparative example 3 | Comparative example 4 | Comparative example 5 | Comparative example 6 |
|---|---|---|---|---|---|---|
| Strobilurin-based compound S1 | 20.59g | - | 20.59g | 20.59g | - | - |
| Strobilunin-based compound S5 | - | 20.59g | - | - | 20.59g | 20.59g |
| Plysurf A210G | - | - | 3.0g | - | 3.0g | - |
| Hitenol NF13 | - | - | - | 3.0g | - | 3.0g |
| Newkalgen WG-1 | 0.5g | 0.6g | - | - | - | - |
| Newkalgen WG-4 | 10.0g | 10.0g | - | - | - | - |
| Antifoam E20 | 0.1g | 0.1g | 0.1g | 0.1g | 0.1g | 0.1g |
| PROXEL GXL | 0.02g | 0.02g | 0.02g | 0.02g | 0.02g | 0.02g |
| Rhodopol 23,2% aqueous solution | 7.0g | 7.0g | 12.0g | 12.0g | 12.0g | 12.0g |
| Sodium hydroxide (5N) | - | - | 1.7g | - | 1.7g | - |
| Deionized water | 61.79g | 61.48g | 62.59g | 64.29g | 62.28g | 63.98g |
| Total | 100.0g | 100.0g | 100.0g | 100.0g | 100.0g | 100.0g |

### (Chemical damage test to tomato)

Nine tomato plants (variety: House Momotaro) were seeded in a raising seedling (3 cm × 3 cm), and the seeds were grown in a glass greenhouse. 43 days after the seeding, samples of the agricultural chemical preparation in the form of an aqueous suspension obtained in Example 2 were diluted 250-fold (800 ppm), 500-fold (400 ppm), 1,000-fold (200 ppm), and 2,000-fold (100 ppm) with deionized water. 10 ml of each sample was atomized to nine plants with a spray gun, and the plants were held in the glass greenhouse.

Seven days after the spraying of formulation, the upper three leaves in each plant were examined and the chemical damage index was determined in accordance with the above-described criteria. The chemical damage indices of the agricultural chemical preparations in the form of aqueous suspensions obtained in Example 3 and Comparative examples 3 through 6 were also determined in a similar manner. The results are shown in Tables 6 and 7. In Tables 6 and 7, the "total average" represents the simple average value of the chemical damage indices of the leaves in all the pots tested, and the "average per plant" represents the maximum value and the minimum value of the average values, each of which is obtained from the chemical damage indices of the leaves in each plant.

**(Table 6)**

| Tomato | Example 2 | | Comparative example 3 | | Comparative example 4 | |
|---|---|---|---|---|---|---|
| Concentration (ppm) | Total average | Range of average per plant | Total average | Range of average per plant | Total average | Range of average per plant |
| 800 | 0. 24 | 0.00∼0.67 | 1. 28 | 0.83∼2.33 | 1. 01 | 0.17∼2.00 |
| 400 | 0. 04 | 0.00∼0.17 | 0. 15 | 0.00∼0.83 | 0. 20 | 0.00∼0.67 |
| 200 | 0. 04 | 0.00∼0.17 | 0. 17 | 0.00∼0.33 | 0. 07 | 0.00∼0.33 |
| 100 | 0. 04 | 0.00∼0.33 | 0. 02 | 0.00∼0.17 | 0. 09 | 0.00∼0.50 |
| Control | 0. 00 | 0.00∼0.00 | - | - | - | - |

**(Table 7)**

| Tomato | Example 3 | | Comparative example 5 | | Comparative example 6 | |
|---|---|---|---|---|---|---|
| Concentration (ppm) | Total average | Range of average per plant | Total average | Range of average per plant | Total average | Range of average per plant |
| 800 | 0. 00 | 0.00∼0.00 | 1. 31 | 0.33∼2.33 | 1. 35 | 0.67∼2.00 |
| 400 | 0. 07 | 0.00∼0.50 | 0. 17 | 0.00∼0.67 | 0. 44 | 0.17∼0.83 |
| 200 | 0. 02 | 0.00∼0.17 | 0. 07 | 0.00∼0.33 | 0. 00 | 0.00∼0.00 |
| 100 | 0. 00 | 0.00∼0.00 | 0. 06 | 0.00∼0.33 | 0. 00 | 0.00∼0.00 |
| Control | 0. 00 | 0.00∼0.00 | - | - | - | - |

From Tables 6 and 7, the following is appreciated.
(1) In both Example 2 and Comparative examples 3 and 4, slight brown necrosis spots were observed at a concentration of 100 ppm, and no noticeable difference was observed between concentrations or formulations in the range of concentrations of 100 ppm through 400 ppm. At the concentration of 800 ppm, noticeable chemical damage (brown necrosis spots) were observed in both Example 2 and Comparative examples 3 and 4. Comparative examples 3 and 4 exhibited high chemical damage indices of 1.28 and 1.01, whereas Example 2 exhibited a clearly lower chemical damage index of 0.24
(2) Noticeable chemical damage was observed in Comparative example 5 at a concentration of 800 ppm, and also in Comparative example 6 at the concentrations of 400 ppm and 800 ppm. In Example 3, no noticeable chemical damage was observed even at a concentration of 800 ppm. Thus, the formulation of Example 3 was determined to cause clearly less chemical damage as compared to the formulations of Comparative examples 5 and 6.

From the above results, it has been demonstrated that a composition according to the present invention using a sulfonic acid-based surfactant causes less chemical damage than compositions using other surfactants (for example, phosphate ester-based or ether sulfuric acid-based surfactants).

### INDUSTRIAL APPLICABILITY

### (Effect of the Invention)

According to the present invention, a fungicide composition which can alleviate chemical damage can be provided. A fungicide composition according to the present invention reduces generation of chemical damage by a strobilurin-based fungicidal compound by comprising one or two or more sulfonic acid-based surfactants selected from the group consisting of a ligninsulfonic acid salt, an arylsulfonic acid salt, an arylsulfonic acid condensate salt, an alkylarylsulfonic acid salt, and an alkylarylsulfonic acid condensate salt.

## Claims

1. A fungicide composition causing reduced chemical damage, comprising:
(a) one or two or more strobilurin-based fungicidal compounds; and
(b) one or two or more sulfonic acid based surfactants selected from the group consisting of a ligninsulfonic acid salt, an arylsulfonic acid salt, an arylsulfonic acid condensate salt, an alkylarylsulfonic acid salt, and an alkylarylsulfonic acid condensate salt,
wherein when the sulfonic acid-based surfactant is a ligninsulfonic acid salt, silicic acid and/or potassium silicate are not included; and when the sulfonic acid-based surfactant is an arylsulfonic acid condensate salt or a combination of an arylsulfonic acid condensate salt and a ligninsulfonic acid salt, the strobilurin-based fungicidal compound is not metominostrobin.

2. A fungicide composition according to claim 1, wherein the sulfonic acid-based surfactant is a ligninsulfonic acid salt.

3. A fungicide composition according to claim 1, wherein the sulfonic acid-based surfactant is an arylsulfonic acid salt.

4. A fungicide composition according to claim 1, wherein the sulfonic acid-based surfactant is an alkylarylsulfonic acid salt.

5. A fungicide composition according to claim 1, wherein the sulfonic acid-based surfactants are a ligninsulfonic acid salt and an alkylarylsulfonic acid salt.

6. A fungicide composition according to claim 1, wherein the content of the strobilurin-based fungicidal compound is 0.5% by weight to 90% by weight, and the content of the sulfonic acid-based surfactant is 1% by weight to 20% by weight.

7. A fungicide composition according to claim 1, which includes substantially no surfactant having a polyoxyethylene chain in its chemical structure.

8. A fungicide composition according to claim 1, which is in the form of an aqueous suspension of an agricultural chemical preparation.

9. A fungicide composition according to claim 8, wherein the average particle diameter of the strobilurin-based fungicidal compound is 0.1 µm to 10 µm.

10. A fungicide composition according to claim 8, wherein the average particle diameter of the strobilurin-based fungicidal compound is 0.5 µm to 4 µm.

11. A fungicide composition according to claim 8, further comprising a polymer-based thickening agent or an inorganic thickening agent.

12. A fungicide composition according to claim 11, wherein the thickening agent is at least one selected from the group consisting of xanthan gum, wellane gum, rhamxan gum, guar gum, locust bean gum, tragacanth gum, and colloidal silica.

13. A fungicide composition according to claim 12, wherein the thickening agent is xanthan gum.

14. A fungicide composition according to claim 11, wherein the content of the thickening agent is 0.01% by weight to 20% by weight.

15. A fungicide composition according to claim 1, wherein the strobilurin-based fungicidal compound is metominostrobin, azoxystrobin, kresoxym methyl, 2-[2-(2,5-dimethylphenoxymethyl)phenyl]-2-methoxy-N-methyl-acetamide, or 2-[2-(2,5-dimethylphenoxymethyl) phenyl]-2-methoxyimino-N-methylacetamide.
